# EUROPEAN PATENT APPLICATION

(11) **EP 0 810 464 A2**
(43) Date of publication of application: **03.12.1997**
(21) Application number: 97303577.7
(22) Date of filing: 27.05.1997
(51) Int. Cl.: G02F 1/1337

(54) **Manufacture of liquid crystal display device using polarization storage film as alignment film**

(30) Priority: 27.05.1996 JP 132039/96
(71) Applicant: Stanley Electric Co., Ltd., Meguro-ku Tokyo (JP)
(72) Inventor: Toko, Yasuo, c/o Stanley Electric Co., Ltd., Yokohama-shi, Kanagawa (JP); Sugiyama, Takashi c/o Stanley Electric Co., Ltd., Yokohama-shi, Kanagawa (JP); Ando, Kiyoshi c/o Stanley Electric Co., Ltd., Yokohama-shi, Kanagawa (JP)
(74) Representative: Paget, Hugh Charles Edward

(57) **Abstract**

A substrate having a polarization storage film formed thereon is prepared, the polarization storage film generating, upon absorption of polarized light, a power of orienting liquid crystal molecules in one direction associated with the polarization direction of the polarized light. An alignment process is performed by applying non-polarized light to the polarization storage film along a direction oblique to the substrate and absorbing the non-polarized light in the polarization storage film. A pair of substrates including at least the substrate underwent the alignment process is faced each other to form a liquid crystal cell and liquid crystal material is injected into the liquid crystal cell. The alignment process can be performed in short time and with ease which can give a sufficiently large pre-tilt angle.

## Description

This application is based on Japanese Patent Application No. Hei 8-132039 filed on May 27, 1996, the entire contents of which are incorporated herein by reference.

### BACKGROUND OF THE INVENTION

### a) Field of the Invention

The present invention relates to a method of manufacturing a liquid crystal display device whose liquid crystal molecules are oriented to have pre-tilt.

### b) Description of the Related Art

A so-called rubbing process has been used as one of conventional alignment processes in which glass substrates holding liquid crystal molecules therebetween are rubbed with cotton cloth or the like in one direction. The rubbing process may cause alignment defects or display defects because of static electricity generated on substrates or dusts attached to the substrates.

As a substitute for the rubbing process, an alignment process using a polarization storage film is also used. With this alignment process, after a polarization storage film is formed on the surface of a substrate, polarized light is applied to the polarization storage film to orient liquid crystal molecules in a desired direction. The polarization storage film once applied with polarized light can give liquid crystal molecules an orientation same as the polarization direction of the applied light. The following alignment methods using a polarization storage film have been presented.
(1) Using silicon polyimide doped with diazoamine dyes (Wayne M. Gibbons et al, NATURE Vol. 351 (1991) p. 49).
(2) Using PVA (polyvinyl alcohol) doped with azo dyes (Harufumi IIMURA et al, 18th Liquid Crystal Panel Discussion, The Chemical Society of Japan, 64th Autumn Annual Meeting, p. 34, issued on September 11, 1992 by a corporate juridical person, The Chemical Society of Japan, and Jpn J. Appl. Phys. Vol. 32 (1993), pp. L93 - L96).
(3) Using photopolymerized photopolymer (Martin Schadt et al, Jpn J. Appl. Phys. Vol. 31 (1992), pp. 2155 - 2164).
(4) Applying polarized light to a polyvinyl 4-methoxycinnamate (PVC) film to orient liquid crystal molecules in a horizontal direction normal to the polarizing direction (for example, JP-A-5-326990).
(5) Applying polarized light to a PVC film along a direction normal to a substrate and thereafter applying polarized light along a direction (azimuth direction) normal to the polarizing direction and at a constant angle relative to the substrate normal to give pre-tilt (for example, JP-A-5-203184 and JP-A-7-213610).

Some twist-nematic type liquid crystal display devices have liquid crystal molecules slanted before hand relative to the substrate surface. Namely, each liquid crystal molecule at the substrate interface is in the state that one end of the director is lifted by a certain angle relative to the substrate surface when voltage is not applied between the liquid crystal cell. When voltage is applied between the substrates, all liquid crystal molecules in the lifted state start slanting in one direction. This state is called pre-tilt and this angle is called pre-tilt angle.

A liquid crystal molecule with a pre-tilt angle starts rising from the one end lifted from the substrate, when voltage is applied between the substrates. If all liquid crystal molecules have the same pre-tilt angle, all of them start rising in the same direction.

For liquid crystal molecules without pre-tilt, it is not definite that which end of each director starts rising. Tf all liquid crystal molecules have no pre-tilt or have a small pre-tilt angle, two regions are formed, in one region one end of each director rises and in the other region the other end thereof rises. At the boundary of these two regions, a line defect (reverse tilt discrimination line) becomes likely to appear on the liquid crystal display screen.

This reverse tilt discrimination line is often formed particularly near at a threshold voltage of the applied voltage. The position of a reverse tilt discrimination line changes with applied voltage and time so that a presence of a line defect is easily recognized with eyes. Light scattering and lowered contrast are also accompanied so that the display quality of a liquid crystal display is lowered greatly.

The above alignment processes (1) to (4) cannot give pre-tilt and are associated with the above problems.

The alignment process (5) can give a pre-tilt angle by applying polarized light twice. When the polarized light is applied first time, it is applied to a polarization storage film along the direction normal to the substrate to produce an easy axis which is in parallel to the substrate surface and in the direction normal to the polarizing axis. When the polarized light is applied second time, it is applied to the polarization storage film along the oblique direction relative to the substrate surface to give pre-tilt. With this method, alignment of liquid crystal molecules with pre-tilt in a desired direction can be achieved only if polarized light is applied twice.

The alignment method (5) forms only a small pre-tilt angle. For example, if a PVC film is used as a polarization storage film and fluorene type mixed liquid crystal is used as the liquid crystal material, the pre-tilt angle obtained is about 0.1° to 0.3°. Such a small pre-tilt angle generates a number of reverse tilt discrimination lines immediately after voltage is applied, similar to the case where no pre-tilt angle is given. Although these reverse tilt discrimination lines disappear as the time lapses, such liquid crystal molecules are not used for a moving image display because of the time (about several tens seconds) required for the extinction of defect lines.

The method using polarized light cannot use non-polarized light (natural light). Since polarized light transmitted through a polarizer or the like is used, the use efficiency of light energy is low and the light intensity lowers by about a half of the original light intensity. More importantly, the alignment method (5) requires two processes of applying polarized light so that manufacture throughput is lowered by work time and labor and manufacture cost rises.

### SUMMARY OF THE INVENTION

It is an object of the present invention to provide a method of manufacturing a liquid crystal display device capable of performing an alignment process with ease and in a short time while giving a sufficiently large pre-tilt angle without using a rubbing process which may cause product defects.

According to one aspect of the present invention, there is provided a method of manufacturing a liquid crystal display device comprising: a preparation step of preparing a substrate having a polarization storage film formed thereon, upon absorption of polarized light the polarization storage film generating a power of orienting liquid crystal molecules in one direction associated with the polarization direction of the polarized light; an alignment step of applying non-polarized light to the polarization storage film along a direction oblique to the substrate and absorbing the non-polarized light in the polarization storage film; and an injection step of facing a pair of substrates including at least the substrate underwent the alignment step to form a liquid crystal cell and injecting liquid crystal material into the liquid crystal cell.

The alignment process capable of giving a sufficiently large pre-tilt angle can be performed easily in a short time, only by applying non-polarized light once to a substrate with a polarization storage film along an oblique direction relative to the substrate surface. Since pre-tilt orientation is formed not by polarized light but by non-polarized light, the use efficiency of light source energy can be improved and manufacture cost can be reduced.

The rise direction of liquid crystal molecules can be regulated along one direction by pre-tilt when voltage is applied. It is therefore possible to realize a display without any defect such as reverse tilt discrimination lines. This optical alignment process does not require a rubbing process so that the problems of static electricity and dust attachment can be solved.

If a photomask is used, the invention is easily applied to multi-domain alignment (divisional alignment).

### BRIEF DESCRIPTION OF THE DRAWINGS

Fig. 1A is a side view illustrating an optical alignment process, Fig. 1B is a front view of a substrate, Fig. 1C is an enlarged cross sectional side view of a polyimide polarization storage film before non-polarized ultraviolet rays are applied, and Fig. 1D is an enlarged cross sectional side view of the film after non-polarized ultraviolet rays are applied.

Fig. 2 is a graph showing the characteristics of the generation state (extinction time) of reverse tilt discrimination lines formed on liquid crystal cells manufactured at various slant angles θ.

Fig. 3 is a cross sectional view of a photomask used for forming divisional alignments.

Fig. 4 is a plan view of a photomask used for an optical alignment process.

Fig. 5 is a sketch of a microscopic photograph of fine patterns formed on a substrate showing the alignment state of a liquid crystal cell underwent the optical alignment process using a photomask.

Fig. 6 is a sketch of a microscopic photograph of fine patterns formed on a substrate showing the alignment state of another liquid crystal cell underwent the optical alignment process using a photomask.

Fig. 7 is a graph showing the view angle characteristics of transmittances at various applied voltages of a twisted nematic liquid crystal cell with four divisional alignments (multi-domain) formed by the optical alignment process using a photomask.

### DETAILED DESCRIPTION OF THE PREFERRED EMBODIMENTS

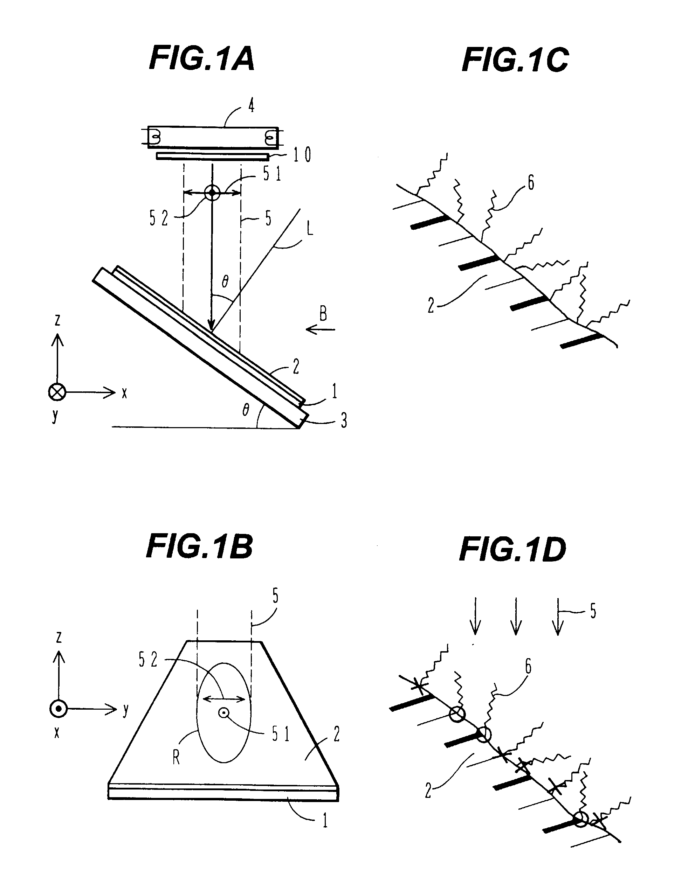

With reference to Figs. 1A to 1D, an optical alignment process of a liquid crystal display device manufacture method according to an embodiment will be described. Fig. 1A is a schematic side view showing an alignment system, and Fig. 1B is a front view when Fig.1 is viewed along the direction indicated by an arrow B. In Figs. 1A and 1B, X, Y and Z indicate directions normal to each other. The optical alignment process of this embodiment can give a sufficiently large pre-tilt angle by applying natural light or non-polarized light only once.

Placed on a stage 3 is a glass substrate 1 having a polyimide polarization storage film 2 formed on the surface thereof. Electrodes and driver elements generally used for a liquid crystal display panel are formed in the glass substrate 1 under the polarization storage film 2. A light source 4 for generating light (non-polarized light) 5 in the ultraviolet wavelength range is placed at a suitable position so that it can apply the non-polarized light to the polarization storage film 2 formed on the substrate 1. An interference filter 10 is disposed between the light source 4 and a stage 3 so that light in the unnecessary wavelength range can be cut. As shown in Fig. 1A, the stage 3 is slanted by an angle θ in the X-direction relative to the X-Y horizontal plane. Similarly, the substrate 1 is slanted by the angle θ relative to the X-Y horizontal plane.

The transmission direction of light 5 emitted from the light source 4 is parallel to the Z-direction normal to the X-Y horizontal plane. Therefore, a slant angle of the light 5 relative to the normal L of the substrate 1 is θ. In other words, the ultraviolet rays 5 are obliquely applied to the polarization storage film 2 at an incident angle θ. This ultraviolet rays are non-polarized rays and can be divided into rays containing X-direction polarized light components 51 and Y-direction polarized light components 52.

As shown in Fig. 1B, the light radiated region R on the surface of the polarization storage film expands in the X-direction. It is assumed that the surface of the polarization storage film 2 is flat and it interacts with the polarized light components 51 and 52 of the radiated light. Irrespective of the slant angle θ, the Y-direction polarized components 52 are always parallel to the surface of the polarization storage film 2, and the total intensity of these Y-direction polarized components contributes to the interaction. On the other hand, the angle θ of the X-direction polarized light components 51 relative to the surface of the polarization storage film 2 becomes large as the slant angle θ becomes large, and the in-plane components of the X-direction polarized light components 51 reduce by a factor of cos θ. Namely, the effective intensity of the X-direction polarized light components reduces as the slant angle increases.

As light is applied to the substrate slanted in the X-direction as shown in Figs. 1A and 1B, the effective amount of applied Y-direction polarized light components is largest, and that of applied X-direction polarized light components is smaller than the Y-direction polarized light components. As a result, directivity is generated in the in-plane direction of the polarization storage film.

If the polarization storage film 2 is a polyimide film having side chains and tends to orient liquid crystal molecules in the direction normal to the polarized direction, alignment of liquid crystal molecules may be ascribed to side chains cut by the absorption of ultraviolet rays. In other words, side chains left even after the application of ultraviolet rays give alignment of liquid crystal molecules. It can be presumed that ultraviolet rays enhance the dissolution reaction of polyimide so that the less the exposed light amount, the smaller the force of aligning liquid crystal molecules.

Figs. 1C and 1D are enlarged cross sectional side views of the polyimide polarization storage film 2. Fig. 1C shows the polyimide polarization storage film 2 before non-polarized ultraviolet rays are applied, and Fig. 1D shows the film 2 after non-polarized ultraviolet rays are applied. Side chains 6 depicted like saw-tooth lines in Figs. 1C and 1D function to give pre-tilt to polyimide molecules. As described earlier, polyimide material reduces more the force of orienting liquid crystal molecules in one direction as the effective amount of applied light becomes larger. Namely, the dissolution reaction of side chains progresses more. It can therefore be presumed that side chains with cross marks in Fig. 1D slanted by an angle as large as about 90 degrees relative to the radiation direction of ultraviolet rays 5 are more easy to dissolve, whereas side chains with circle symbols directed in generally the same direction as the radiation direction are hard to dissolve even under significant radiation. As a result, most of side chains directed in generally the same direction as the radiation direction of ultraviolet rays 5 are left undissolved, and these side chains cause liquid crystal molecules to be aligned in a slanted direction so that pre-tilt in the light radiation direction can be realized.

Polyimide without side chains applied with non-polarized light once had uniform alignment with pre-tilt. However, the slant angle θ was required which was larger than that when used for polyimide with side chains.

Two substrates are prepared which underwent the above optical alignment process, or alternatively one of such substrates and one substrate underwent conventional alignment process are prepared. Each set of two substrates is faced each other with a predetermined gap therebetween, with the alignment directions of the substrates being set perpendicular, to form an empty cell. Nematic liquid crystal material is injected into this empty cell, and polarizing plates are mounted on both sides of the cell in a cross-Nicol layout to complete a 90° twist nematic liquid crystal display device.

### (1st Embodiment)

A polyimide film with side chains was formed on a substrate. This film formation may use well-known coating techniques. The material of this polyimide film is commercially available from those polyimide materials sold for liquid crystal display devices and is not a specific one. This film has a property of orienting liquid crystal molecules in the direction normal to the polarizing axis upon application of polarized light.

This substrate with the polyimide film was disposed at a slant angle θ of 30° as shown in Fig. 1A, and non-polarized light having an energy density of 500 mJ/cm² was applied along the Z-direction. In this case, the interference filter 10 having a center wavelength of 254 nm was interposed hetween the ultraviolet light source and substrate to cut light components of the applied light having a wavelength outside of the range from 210 to 300 nm.

Two substrates formed in the above manner were faced each other with the 90° twisted alignment process relationship, by inserting a gap control member therebetween to set a gap of 5 µm, to form an empty cell. The manufacture of an empty cell and the following liquid crystal injection method may use well-known manufacture techniques.

Fluorine contained mixed liquid crystal material added with chiral material (S-811) was injected into the empty cell through vacuum injection. After the injection, injection holes were sealed and the cell was heated to an NI (nematic-isotropic) phase transition temperature (98°) or higher to eliminate fluid orientation. Thereafter, the cell was cooled to again align liquid crystal molecules to the nematic phase.

The display surface of the liquid crystal cell applied with voltage was observed with a polarization microscope, but no reverse tilt discrimination line was observed.

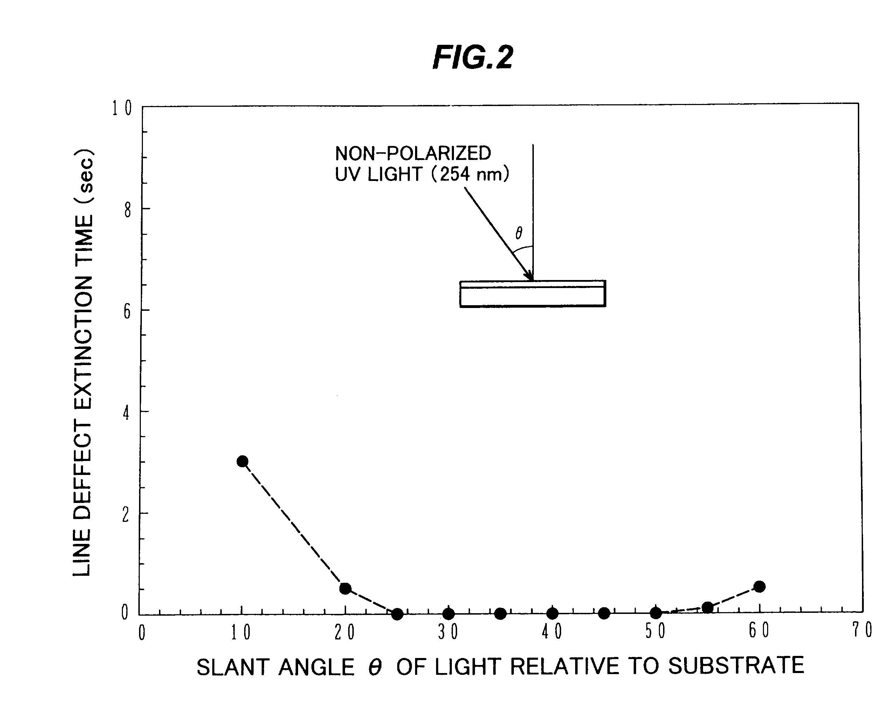

Several liquid crystal cells were manufactured by the processes same as the above processes at various slant angles θ under the same conditions that ultraviolet rays near 254 nm were applied for 100 seconds. The generation state of reverse tilt discrimination lines on the display surfaces of these liquid crystal cells applied with voltage was observed. The results are shown in the graph of Fig. 2.

As apparent from the graph of Fig. 2, reverse tilt discrimination lines were not generated at all up to the slant angle θ of 25° to 50°. At 20° and 60°, very small (short) reverse tilt discrimination lines were generated, but they disappeared instantaneously in 0.5 seconds or shorter. Also at a small slant angle of 10°, reverse tilt discrimination lines disappeared in 3 seconds or shorter. With the conventional method of applying polarized light twice, the pre-tilt angle of the same polyimide material attained even under the optimum conditions was 0.3° or smaller and the time required for reverse tilt discrimination lines to completely disappear was several tens seconds. As compared to this fact, the results shown in Fig. 2 indicates that the effects of this embodiment is very excellent.

### (2nd Embodiment)

Similar to the first embodiment, a polyimide film was formed on a substrate. This substrate with the polyimide film was disposed at the slant angle θ of 45°. Without using the interference filter as in the first embodiment, non-polarized light having all wavelengths in the range from 254 to 365 nm was applied for 50 seconds in the Z-direction. Similar to the first embodiment, two substrates underwent the above optical alignment process were faced each other with a gap of 5 µm therebetween and liquid crystal material was injected to form an empty cell. Alto in this embodiment, reverse tilt discrimination lines were not observed at all. The relationship between the slant angle of the ultraviolet rays having such a wide wavelength range and reverse tilt discrimination lines was generally the same characteristics shown in the graph of Fig. 2.

### (3rd Embodiment)

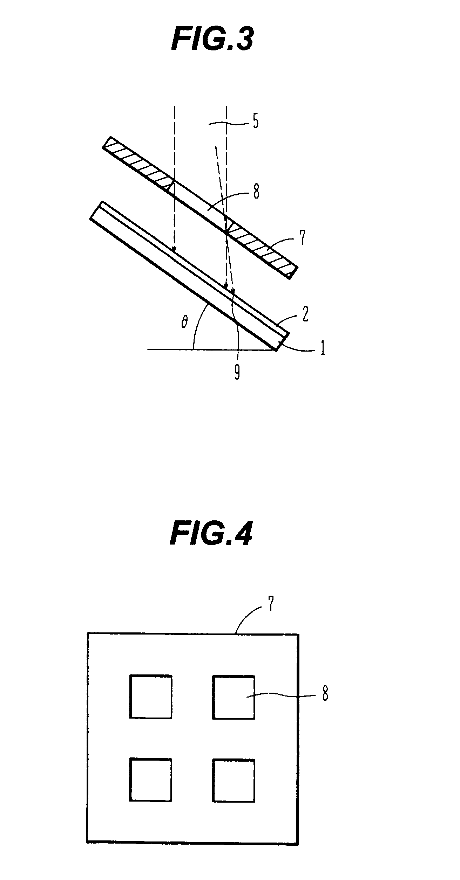

With reference to Figs. 3 and 4, another embodiment will be described in which a pixel is divided into a plurality of small regions through divisional alignment of the optical alignment process. Similar to the first embodiment, a polyimide film 2 was formed on a substrate 1, and the substrate was placed on a slanted stage. A photomask 7 was disposed between a light source and the substrate 1 and in parallel to the substrate 1, as shown in Fig. 3. Fig. 4 is a plan view of the photomask 7. A metal pattern is formed on a quartz plate. This metal pattern has openings 8 only through which ultraviolet rays pass.

If the slant angle θ is too large or the light radiation time is short when ultraviolet rays 5 are applied via the photomask 7 to the substrate, it is conceivable that a sufficient amount of light becomes difficult to be applied to the substrate because the light is reflected or absorbed at the surface or inside of the photomask 7. For example, when light was applied at the slant angle θ of 60°, regular alignment was not obtained even if the light was applied for a fairly long time.

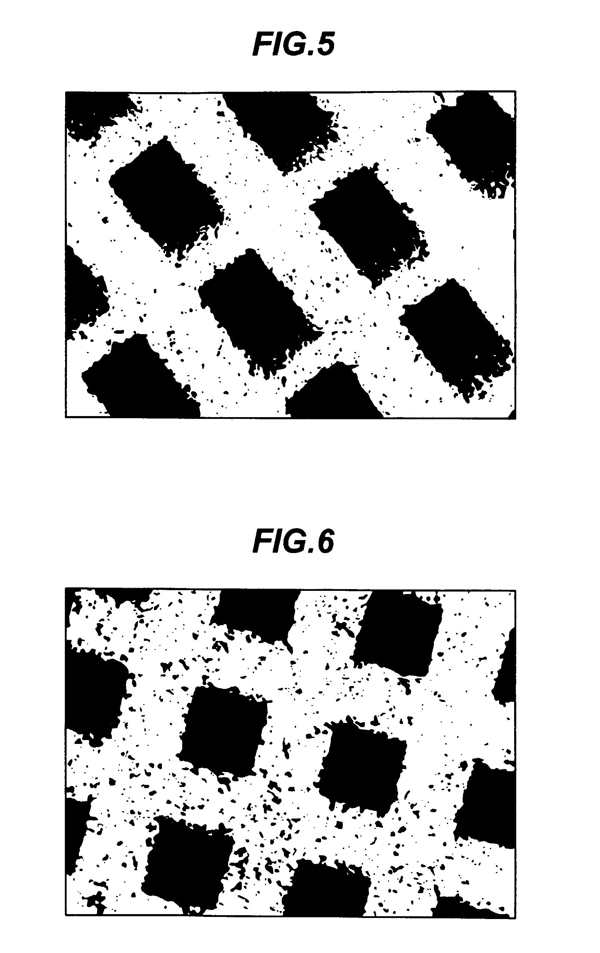

The alignment process was executed under the different conditions that the substrate 1 was disposed at the slant angle θ of 45° and ultraviolet rays 5 were applied, via an interference filter having a center wavelength of 254 nm and via the photomask 7, to the substrate 1 along the Z-direction for 200 seconds. Fig.5 is a sketch of the microscopic photograph showing the alignment state of this substrate. As shown, in the regions applied with ultraviolet rays passed through the openings 8 of the photomask 7, liquid crystal molecules are sufficiently aligned. However, in some regions which are shielded with the photomask and should not be applied with ultraviolet rays, liquid crystal molecules are weakly aligned.

These weakly aligned regions are located only at lower portions 9 of the radiation regions of the polarization storage film 2 shown in Fig. 3, and they are not found at the upper portions, right and left portions of the radiation regions. This phenomenon may be ascribed to ultraviolet rays breaking obliquely through the opening 8 of the photomask 7 or multiple-reflecting in the polyimide film 2 and impinged upon the outer peripheral area of the radiation region of the polyimide film 2.

The alignment process was also executed at a smaller substrate slant angle θ of 35° under the same conditions that ultraviolet rays 5 were applied, via an interference filter having a center wavelength of 254 nm and via the photomask 7, to the substrate 1 along the Z-direction for 200 seconds. Fig. 6 is a sketch of the microscopic photograph showing the alignment state of this substrate. As shown, liquid crystal molecules are finely aligned having a rectangular pattern with the same shape and size as the radiation region of the opening 8 of the photomask 7.

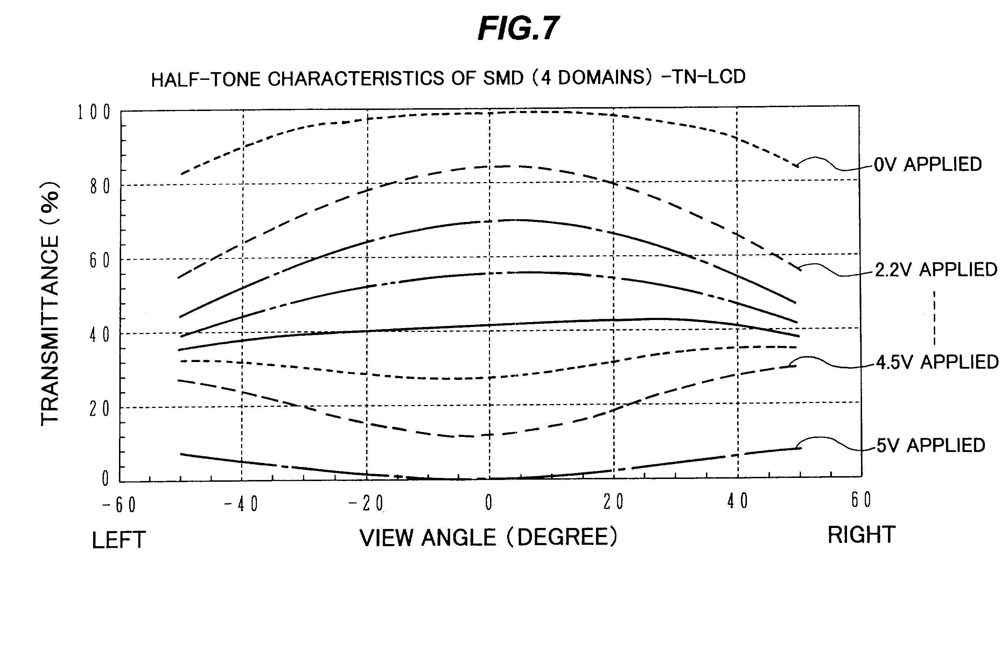

Under the condition of the slant angle θ of 35°, ultraviolet rays were applied to the polarization storage film four times by changing the positions of the photomask 7 and the radiation directions. The obtained alignment had a very fine pattern divided into four domains. Substrates underwent the above four divisional alignments were used for forming twisted nematic liquid crystal cells (super multi-domain liquid crystal cells). The view angle characteristics of half-tone of these liquid crystal cells were measured. The results are shown in the graph of Fig. 7. The slant angle θ is preferably set in the range from 25° to 40° at a maximum when light is applied obliquely by using a photomask.

The ordinate of Fig. 7 indicates a transmittance in (%) where 100 % is a transmittance at the view angle 0° when voltage is not applied. The abscissa represents a view angle (degree) plotted from -60° to +60° symmetrical to 0°. Curves in Fig. 7 are obtained at applied voltages increased from the upper to lower curves. The characteristics of Fig. 7 show excellent view angle characteristics with generally flat transmittance over the broad view angle range.

The above embodiments use the polarization storage film for orienting liquid crystal molecules in the direction normal to the polarization axis direction. The same effects can be obtained by using a polarization storage film for orienting liquid crystal molecules in the direction parallel to the polarization axis direction. The method of injecting liquid crystal is not limited to the vacuum injection method, but various other methods may be used such as utilizing capillary phenomenon. Liquid crystal material may be injected in the isotropic phase, and after it is gradually cooled the alignment is again performed.

As a polarization storage film, a polyimide film without side chains having a small surface energy of about 40 dyn/cm may be used. In order to obtain a uniform pre-tilt angle by using such a polyimide film, it is preferable to execute the optical alignment process by setting the substrate slant angle θ to 45° or larger. Other films such as an optical alignment PVC film may be used. As described earlier, the invention is applicable to multi-domain alignment by dividing one pixel into a plurality of domains and changing the radiation direction and substrate slant angle for each domain.

The present invention has been described in connection with the preferred embodiments. The invention is not limited only to the above embodiments. It is apparent that various modifications, improvements, combinations, and the like can be made by those skilled in the art.

## Claims

1. A method of manufacturing a liquid crystal display device comprising:
a preparation step of preparing a substrate having a polarization storage film formed thereon, upon absorption of polarized light the polarization storage film generating a power of orienting liquid crystal molecules in one direction associated with the polarization direction of the polarized light;
an alignment step of applying non-polarized light to the polarization storage film along a direction oblique to the substrate and absorbing the non-polarized light in the polarization storage film; and
an injection step of facing a pair of substrates including at least the substrate underwent said alignment step to form a liquid crystal cell and injecting liquid crystal material into the liquid crystal cell.

2. A method according to claim 1, wherein said preparation step uses the polarization storage film made of material having a property of orienting liquid crystal molecules in a direction normal to the polarization direction of linearly polarized light or the longitudinal direction of elliptically polarized light.

3. A method according to claim 1, wherein said preparation step uses the polarization storage film made of material having a property of orienting liquid crystal molecules in a direction parallel to the polarization direction of linearly polarized light or the longitudinal direction of elliptically polarized light.

4. A method according to claim 1, wherein the polarization storage film is made of polyimide with side chains.

5. A method according to claim 1, wherein the polarization storage film has a surface energy of about 40 dyn/cm.

6. A method according to claim 1, wherein the polarization storage film is made of soluble polyvinyl cinnamate.

7. A method according to claim 1, wherein the non-polarized light is applied to the polarization storage film formed on the substrate at an angle in the range from 10° to 60° relative to the normal of the substrate surface.

8. A method according to claim 1, wherein the non-polarized light is applied to the polarization storage film formed on the substrate at an angle in the range from 25° to 50° relative to the normal of the substrate surface.

9. A method according to claim 1, wherein the non-polarized light is applied via a photomask formed with a light transmissive pattern to the polarization storage film formed on the substrate at an angle in the range from 25° to 40° relative to the normal of the substrate surface.

10. A method according to claim 1, wherein in said alignment step, the non-polarized light is applied to the polarization storage film twice or more to form regions having different easy axes by changing the radiation direction and position of the non-polarized light at the same time.

11. A method according to claim 1, wherein the non-polarized light contains light having a wavelength of 254 nm.

12. A method according to claim 1, wherein the non-polarized light contains light having a wavelength range from 254 to 365 nm.
